# EUROPÄISCHE PATENTSCHRIFT

(11) **EP 0 342 707 B1**
(45) Veröffentlichungstag und Bekanntmachung des Hinweises auf die Patenterteilung: **14.12.1994**
(21) Anmeldenummer: 89109104.3
(22) Anmeldetag: 19.05.1989
(51) Int. Cl.: H04M 1/72

(54) **Vorrichtung zum schnurlosen Telefonieren**
Flexless telephone system
Dispositif de téléphonie sans fil

(30) Priorität: 20.05.1988 AT 1339/88
(43) Veröffentlichungstag der Anmeldung: 23.11.1989
(73) Patentinhaber: Siemens Aktiengesellschaft Österreich, 1210 Wien (AT); SIEMENS AKTIENGESELLSCHAFT, 80333 München (DE)
(72) Erfinder: Forer, Josef, Dipl.-Ing., A-1060 Wien (AT); Lafferl, Hans, Dipl.-Ing. Dr., A-2560 Berndorf (AT)
(74) Vertreter: Fuchs, Franz-Josef, Dr.-Ing.

(56) Entgegenhaltungen:
- EP-A- 0 148 458
- EP-A- 0 166 551
- EP-A- 0 213 780
- EP-A- 0 219 085
- EP-A- 0 243 899
- EP-A- 0 244 872
- DE-A- 3 004 817
- GB-A- 2 006 579
- GB-A- 2 138 652
- GB-A- 2 166 622
- REVIEW OF THE ELECTRICAL COMMUNICATION LABORATORIES, Bd. 18, Nr. 3-4, März 1970, TOKYO, JP, Seiten 179-202; UENISHI: 'Base station antennas in the 400 MHz band mobile radio telephone system'

## Beschreibung

Die Erfindung betrifft eine Vorrichtung zum schnurlosen Telefonieren, bestehend aus einem Festteil mit Funk- und Leitungsteil und mehreren Mobilteilen mit jeweils individueller, mit dem Festteil austauschbarer Kennung.

In der EP-A-0 180 178 wird ein Schnurlos-Telefonsystem beschrieben, bei dem einem Festteil mehrere Mobilteile zugeordnet sind. Die Mobilteile unterscheiden sich durch ihre gerätespezifische Kennung. Einem Haupt-Mobilteil sind mehrere Neben-Mobilteile untergeordnet. Es ist nur vom Haupt-Mobilteil möglich, abgehende Gespräche zu führen und ankommende anzunehmen. Von den Neben-Mobilteilen können nur ankommende Gespräche entgegengenommen werden (siehe Seite 2 und Anspruch 1). Dadurch wird verhindert, daß von möglicherweise unbeaufsichtigten Mobilteilen abgehende Gespräche geführt werden, und der Teilnehmer mit Gebühren belastet wird.

Aus der europäischen Patentanmeldung (EP-A-0 219 885) ist bereits eine schnurlose Nebenstellenanlage ("wireless PBX") bekannt. Diese Nebenstellenanlage weist eine Mehrzahl von Feststationen (Transceiver) auf, wobei jede Feststation jeweils nur mit einem zugeordneten Mobilteil kommuniziert.

Ein Schnurlostelefon ist im telcom report 10 (1987), Heft 2, Seite 130-137 beschrieben. Es läßt sich auch als Nebenstelle statt eines Schnurtelefones in eine Nebenstellenanlage integrieren. Der technische und finanzielle Aufwand steigt jedoch beträchtlich, wenn mehrere Nebenstellen mit Schnurlostelefonen ausgestattet werden sollen. Für jeden dieser Teilnehmer ist eine spezielle Anschlußbaugruppe, ein Fest- und ein Mobilteil vorzusehen.

Der Erfindung liegt die Aufgabe zugrunde, den technischen Aufwand beim Aufbau mehrerer Nebenstellen mit schnurlosen Telefonen zu verringern.

Diese Aufgabe wird erfindungsgemäß mit den Merkmalen des Patentanspruchs 1 gelöst.
Mit einem Hochfrequenzteil und einer Antenne im Festteil kann gleichzeitig ein Duplexfunkkanal je Mobilteil aufgebaut werden, wodurch dieser eine Festteil mehrere Mobilteile versorgt. Jeder Mobilteil fungiert aufgrund der gerätespezifischen, unterschiedlichen Kennung trotz seines herkömmlichen Aufbaues als vollwertige Nebenstelle. Da eine vom Festteil unabhängige Ladeablage lediglich einen Netzstromanschluß benötigt, kann der Aufstellungsort einfacher geändert werden als bei dem mit der Amtsleitung verbundenen Festteil. Ein oder mehrere Ladeablagen können auch an dem Festteil angeformt oder lösbar mit ihm verbunden sein. Am Leitungsteil können sowohl Amtsleitungen, als auch Querverbindungsleitungen zu einer übergeordneten Nebenstellananlage angeschlossen werden.

Zur Gestaltung einer Heimtelefonanlage ist am Koppelfeld mindestens ein Teilnehmersatz für ein Schnurtelefon und/oder eine Türsprechstelle angeschlossen. Damit ist auch eine Anpassung an unterschiedliche nationale Postvorschriften möglich. Die Leistungsfähigkeit der Nebenstellenanlage wird dadurch erhöht, daß der Festteil mit einer Durchwahlvorrichtung zu den Nebenstellen bestückt ist. Dieses Leistungsmerkmal ist ein Beispiel für die Ausbaufähigkeit der Nebenstellenanlage mit schnurlosen Teilnehmeranschlüssen.

Die Erfindung wird anhand eines Ausführungsbeispieles mit Zeichnungen näher erläutert. Es zeigen:
- Fig.1: die Darstellung der Ausbaustufe des Ausführungsbeispiels,
- Fig.2: ein Blockschaltbild seines Festteiles,
- Fig.3: das detailliertere Blockschaltbild des Niederfrequenzteiles im Festteil und
- Fig.4: das detailliertere Blockschaltbild des Funkteiles des Festteiles.

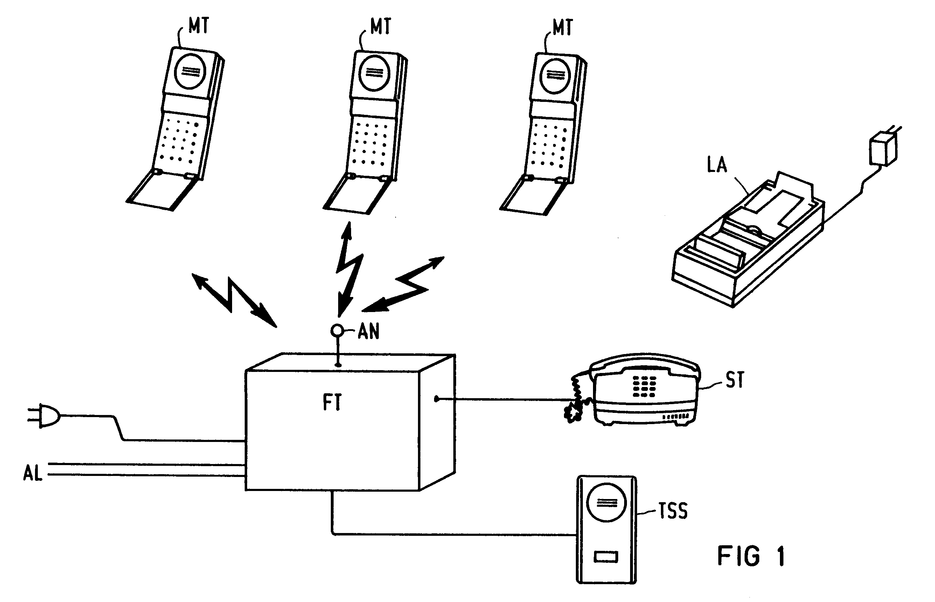

Die Fig.1 zeigt eine Nebenstellenanlage, die an zwei Amtsleitungen AL angeschlossen ist. Ein Festteil FT steht mit bis zu drei Mobilteilen MT in Funkverbindung. Darüberhinaus sind ein Schnurtelefon ST und eine Türsprechstelle TSS als Nebenstellen mit dem Festteil FT verbunden. Zur Aufnahme der Mobiltelefone MT dienen Ladeablagen LA, die einzeln aufgestellt sind oder einen Teil des Festteiles FT bilden. In der Ladeablage LA wird der Akkumulator zur Stromversorgung des Mobilteiles MT aufgeladen bzw. die Ladung gehalten. Sie können auch der Aufnahme eines Reserve-Akkumulators dienen.

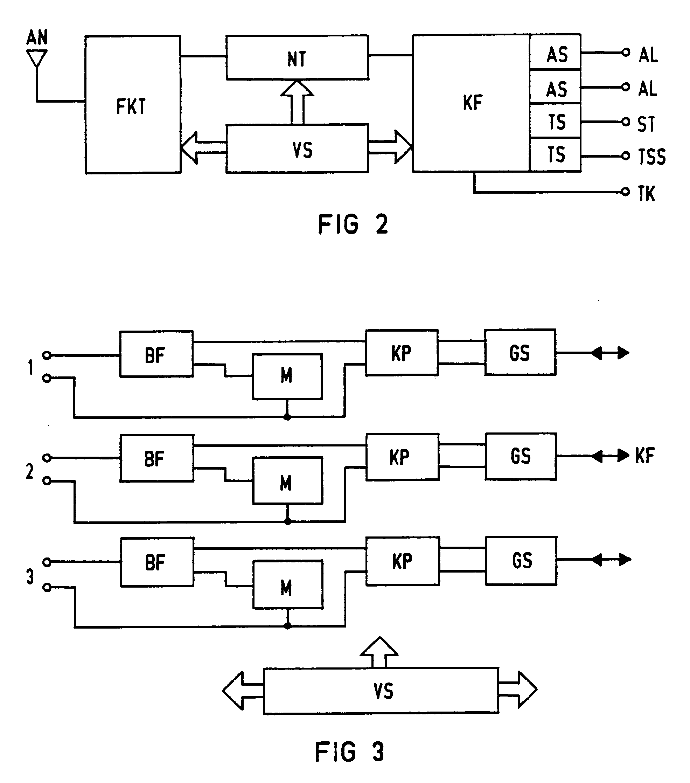

Wie Fig.2 zeigt, sind die Amtsleitungen AL über Amtssätze AS und das Schnurtelefon ST und die Türsprechstelle TSS über Teilnehmersätze TS mit einem Koppelfeld KF im Festteil verbunden. Vermittlungstechnische Schaltungen, beispielsweise eine Durchwahlvorrichtung zu den Nebenstellen, sind an das Koppelfeld KF angeschlossen Ein Türöffnerkontakt TK ergänzt die Türsprechstelle TSS.

Eine Vermittlungssteuerung VS steuert nicht nur das Koppelfeld KF, sondern auch die weitere Signalverarbeitung in einem Niederfrequenz- und Funkteil NT, FKT. Die Hochfrequenzsignale werden über eine Antenne AN abgestrahlt bzw. empfangen. Jeder Mobilteil verfügt über seine eigene gerätespezifische Kennung, die mit dem Festteil ausgetauscht wird. Dieser Vorgang wird von der Vermittlungssteuerung VS überwacht. Da somit jeder Mobilteil identifizierbar ist, kann er über das Koppelfeld KF mit einer anderen Nebenstelle oder einer der Amtsleitungen AL verbunden werden. Mit einer Flüssigkristallanzeige im Mobilteil können aktuelle Informationen, wie Gebühren, rufende oder gerufene Nummer, ankommender Ruf mit Leitungsnummer etc. angezeigt werden.

Der in Fig.3 dargestellte Niederfrequenzteil enthält eine Signalverarbeitungsstrecke für jeden der drei Mobilteile. Nach dem Koppelfeld KF ist jede Signalverarbeitungsstrecke aus einem aktiven Gabelschalter GS aufgebaut, auf den ein Kompander KP folgt. Über ein Modem M werden der Signalverarbeitungsstrecke die vermittlungstechnischen Daten, wie beispielsweise der Kennungsaustausch, von der Vermittlungssteuerung VS entnommen und hinzugefügt. Das erfolgt hauptsächlich beim Auf- und Abbau einer Verbindung zwischen Fest-und Mobilteil. Ein Bandfilter BF begrenzt das Frequenzband, um beim Senden Überlagerungen mit einem benachbarten Kanal zu vermeiden. Darüberhinaus werden über das Bandfilter BF die vermittlungstechnischen Daten vom Modem M sendeseitig eingekoppelt. Empfangsseitig ist das Modem M direkt angeschlossen.

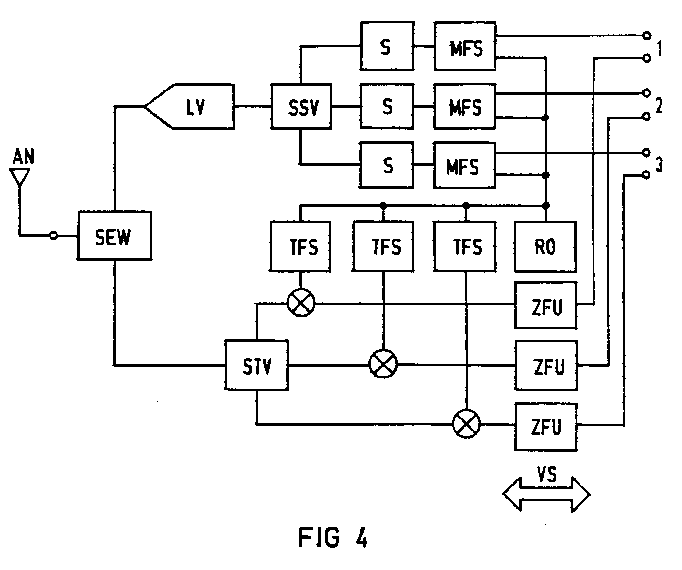

Fig.4 zeigt die Fortsetzung der Signalverarbeitungsstrecken im Funkteil. Sendeseitig wird das Niederfrequenzsignal einem Trägersignal aus dem 900 MHz-Band aufmoduliert. Das erfolgt in einem modulierbaren Frequenzsynthesizer MFS, der von einem Referenzoszillator R0 in PLL-Schaltung stabilisiert wird. Die modulierbaren Frequenzsynthesizer MFS sind mit Schaltern S verbunden, die ihr Ausgangssignal erst nach dem Einschwingvorgang von etwa 1 ms durchschalten. Die Hochfrequenzsignale der drei Signalverarbeitungsstrecken werden in einer passiven Signalsummiervorrichtung SSV addiert. Sie ist in 50-Ohm-Technik aufgebaut und muß gut entkoppelt und angepaßt sein. So werden bei der Summierung Rückwirkungen auf die modulierbaren Frequenzsynthesizer MFS vermieden. Dieses Summensignal wird von einem linearisierten Leistungsverstärker LV verstärkt, der besonders linear und ohne Intermodulation arbeiten muß. Über eine Sende/Empfangsweiche SEW wird das Summensignal zur Antenne AN geleitet und abgestrahlt.

Die von den Mobilteilen empfangenen Signale werden über die Sende/ und Empfangsweiche SEW einer aktiven Signaltrennvorrichtung STV zugeleitet. Sie ist aus drei parallelen Verstärkern aufgebaut, damit am Empfangssignal keine zusätzlichen Verluste auftreten. Jedes der drei Hochfrequenzsignale wird über Trägerfrequenzsynthesizer TFS und einen Zwischenfrequenzumsetzer ZFU in ein Niederfrequenzsignal rückgewandelt. Die Trägerfrequenzsynthesizer TFS arbeiten parallel zu den modulierbaren Frequenzsynthesizern MFS, sind nicht modulierbar und erzeugen eine auf das Trägersignal abgestimmte Frequenz.

## Patentansprüche

1. Vorrichtung zum schnurlosen Telefonieren, bestehend aus einem Festteil (FT) mit Funk- und Leitungsteil und mehreren Mobilteilen (MT) mit jeweils individueller, mit dem Festteil (FT) austauschbarer Kennung,
**dadurch gekennzeichnet**,
daß der Festteil (FT) ein Koppelfeld (KF) aufweist, über das, gesteuert durch eine Vermittlungssteuerung (VS) Verbindungen der Mobilteile (MT) untereinander, Verbindungen zwischen Mobilteilen (MT) und weiteren Nebenstellen (ST,TSS) des als Nebenstellenanlage ausgebildeten Festteils (FT) und Verbindungen zwischen Mobilteilen (MT) und Amtsleitungen (AL) herstellbar sind,
daß der Festteil (FT) je Mobilteil (MT) eine Signalverarbeitungsstrecke aufweist, und
daß im Funkteil des Festteiles (FT) die Signalverarbeitungsstrecken mit einer von der Vermittlungssteuerung (VS) gesteuerten sendeseitigen Signalsummiervorrichtung (SSV) und einer empfangsseitigen Signaltrennungsvorrichtung (STV) verbunden sind.

2. Vorrichtung nach Anspruch 1,
**dadurch gekennzeichnet,**
daß am Koppelfeld (KF) mindestens ein Teilnehmersatz (TS) für ein Schnurtelefon (ST) und/oder eine Türsprechstelle (TSS) angeschlossen ist.

3. Vorrichtung nach Anspruch 1 oder 2,
**dadurch gekennzeichnet,**
daß der Festteil (FT) mit einer Durchwahlvorrichtung zu den Nebenstellen (MT,ST) bestückt ist.

4. Vorrichtung nach einem der Ansprüche 1 bis 3, **dadurch ge****kennzeichnet**, daß für Mobilteile (MT) jeweils eine vom Festteil (FT) unabhängige oder eine einen Teil des Festteils (FT) bildende Ladeablage (LA) vorhanden ist.

5. Vorrichtung nach Anspruch 4,
**dadurch gekennzeichnet,**
daß die Ladeablage (LA) einen Reserve-Akkumulator zur Stromversorgung des Mobilteils (MT) aufnimmt.

6. Vorrichtung zum schnurlosen Telefonieren nach einem der vorstehenden Ansprüche,
**dadurch gekennzeichnet,**
daß Mobilteile (MT) jeweils eine Flüssigkeitskristallanzeige zur optischen Darstellung von Informationen aufweisen.

## Claims

1. Cordless telephone system, comprising a base unit (FT) having a radio and line unit, and a plurality of mobile units (MT) having in each case an individual code that can be exchanged with the base unit (FT), characterized in that the base unit (FT) has a switching network (KF) via which, controlled by a switching controller (VS), connections can be established between the mobile units (MT) themselves, connections can be established between mobile units (MT) and further extensions (ST, TSS) of the base unit (FT) designed as a private branch exchange, and connections can be established between mobile units (MT) and trunk lines (AL), in that the base unit (FT) has one signal processing line for each mobile unit (MT), and in that in the radio unit of the base unit (FT) the signal processing lines are connected to a transmitter-end signal summing device (SSV) controlled by the switching controller (VS) and to a receiver-end signal separating device (STV).

2. System according to Claim 1, characterized in that at least one subscriber line circuit (TS) for a cordless telephone (ST) and/or a door intercom station (TSS) is connected to the switching network (KF).

3. System according to Claim 1 or 2, characterized in that the base unit (FT) is equipped with a direct dialling device to the extensions (MT, ST).

4. System according to one of Claims 1 to 3, characterized in that in each case a charging bracket (LA) which is independent of the base unit (FT) or one which forms a part of the base unit (FT) is provided for mobile units (MT).

5. System according to Claim 4, characterized in that the charging bracket (LA) accommodates a backup battery for supplying power to the mobile unit (MT).

6. Cordless telephone system according to one of the preceding claims, characterized in that mobile units (MT) have in each case a liquid-crystal display for the visual representation of information.

## Revendications

1. Dispositif de téléphonie sans fil, constitué par une partie fixe (FT) comportant une partie de transmission hertzienne et une partie de ligne et plusieurs parties mobiles (MT) possédant chacune un indicatif respectif individuel pouvant être échangé avec la partie fixe (FT), caractérisé par le fait
que la partie fixe (FT) possède un champ de couplage (KF), par l'intermédiaire duquel peuvent être établies, d'une manière commandée par une unité de commande de commutation (VS), des liaisons des parties mobiles (MT) entre elles, des liaisons entre des parties mobiles (MT) et d'autres postes secondaires (ST, TSS) de la partie fixe (FT) réalisée sous la forme d'une installation à postes secondaires, et des liaisons des parties mobiles (MT) et des lignes de service (AL),
que la partie fixe (FT) possède, pour chaque partie mobile (MT), une section de traitement des signaux, et
que dans la partie de transmission hertzienne de la partie fixe (FT), les sections de traitement des signaux sont reliées à un dispositif de sommation de signaux (SSV) situé du côté émission et commandé par l'unité de commande de commutation (VS), et à un dispositif (STV) de séparation des signaux, situé côté réception.

2. Dispositif suivant la revendication 1, caractérisé par le fait qu'au moins un poste d'abonné (TS) pour un téléphone avec fil (ST) et/ou un interphone (TSS) est raccordé au champ de couplage (KF).

3. Dispositif suivant les revendications 1 ou 2, caractérisé par le fait que la partie fixe (FT) est équipée d'un dispositif de sélection pour sélectionner des postes secondaires (MT,ST).

4. Dispositif suivant l'une des revendications 1 à 3, caractérisé par le fait que pour des parties mobiles (MT), il est prévu respectivement un support de réception (LA) qui est indépendant de la partie fixe (FT) ou forme un élément de la partie fixe (FT).

5. Dispositif suivant la revendication 4, caractérisé par le fait que le dispositif de réception (LA) loge un accumulateur de réserve pour l'alimentation en courant de la partie mobile (MT).

6. Dispositif de téléphonie sans fil suivant l'une des revendications précédentes, caractérisé par le fait que des parties mobiles (MT) possèdent chacune un dispositif d'affichage à cristal liquide pour la représentation optique d'informations.
